# EUROPEAN PATENT SPECIFICATION

(11) **EP 1 417 557 B1**
(45) Date of publication and mention of the grant of the patent: **21.06.2006**
(21) Application number: 02755428.6
(22) Date of filing: 23.07.2002
(51) Int. Cl.: G06F 3/14, G09G 5/00

(54) **DISPLAY DEVICE HAVING STAND-ALONE OPERATIONAL MODE AND INPUT MEANS WHICH OTHERWISE CONTROLS HOST COMPUTER**
ANZEIGEVORRICHTUNG MIT EINEM AUTONOMEN BETRIEBSZUSTAND UND EINGABEMITTELN WELCHE ANDERNFALLS DEN TREIBENDEN RECHNER STEUERT
DISPOSITIF D'AFFICHAGE AYANT UN MODE OPERATIONEL AUTONOME ET DES DISPOSITIFS D'ENTREE DE DONNEES, QUI CONTROLENT AUTREMENT L'ORDINATEUR HOTE

(30) Priority: 31.07.2001 US 919661
(43) Date of publication of application: 12.05.2004
(73) Proprietor: Koninklijke Philips Electronics N.V., 5621 BA Eindhoven (NL)
(72) Inventor: ADLER, Glenn, J., NL-5656 AA Eindhoven (NL)
(74) Representative: van der Veer, Johannis Leendert
(86) International application number: PCT/IB2002/003124
(87) International publication number: WO 2003/012607

(56) References cited:
- EP-A- 0 543 089
- WO-A-02/23885
- US-A- 5 539 479

## Description

A Personal Computer (PC) Peripheral is generally plugged directly into the PC via an interface connector. Most commonly today, that connector is becoming the USB (Universal Serial Bus) connector, increasingly more replacing, e.g., IDE, RS232, and other interfaces. A display device ( like a monitor or other type of display) is normally connected as a slave to the PC ( or a Set Top Box), which acts as a host device. The monitor can not operate in a stand-alone mode or use directly any of the PC-peripherals without involving the host device.

US 5,877,745 discloses a processes or system unit coupled to a display device. The display device comprises a peripheral controller via which peripheral devices may communicate with the system unit. The system allows data and instructions to be manually entered from a keyboard, being an example of a peripheral device. These data and instructions are sent via the display device to the system unit. The system unit may send data and instructions to the display device.

EP 0,543,089-A2 discloses a video display which has a microcontroller for receiving inputs via a set of buttons on the display from a user to change display parameters.

US 5,539,479 discloses a video display device such as a television, with a display controller which allows to move a cursor across the screen of the device to direct modifications of displayed visual images.

The non-prepublished application WO-A-02/23885 (attorney docket US 000231) shows a stand-alone monitor as photograph slide show projector. This document relates to a stand-alone monitor for viewing high-resolution digital images without the need of a PC including a means for transferring digital images directly to the stand-alone monitor; a means for displaying the digital images on a display screen of the stand-alone monitor; and a means for controlling the transfer and display of the digital images on the display screen. In one embodiment the images are received from a wireless image source, such as a digital camera. In another embodiment the images are read from an electronic storage media, such as smart media. The viewing of images on the monitor is controlled by a user, via a keypad or remote control, for instance. The keypad and reader/receiver may be integrated directly into the monitor or implemented as an interface within a separate enclosure.

It is an object of the invention to provide a monitor which can operate as a peripheral to a PC as well as in a mode that is independent of the PC. The invention is defined by the independent claims. The dependent claims define advantageous embodiments. It is advantageous if a PC-peripheral (i.e. any input or output device which can be used to control, input data to, or output data from a PC) can also be used by the display device in the PC-independent mode. In this case the peripheral is connected directly to the display device via a wire or wirelessly. Data from that peripheral are used for the PC-independent function(s) contained in the display device. For instance, a mouse can be used to control parameters related to the set-up of the display. This function occurs without intervention of the PC. Therefore, the display device has the circuitry and software onboard itself in order to interpret the data directly received from the peripheral. During the time interval wherein the display device is utilizing the data from the peripheral in question, this data is not passed on to the host device. Furthermore, when the display device is switched to "slave" mode, (e.g., into a mode wherein it serves as a monitor for a PC), the data from the peripheral is passed through to the host. This can be achieved either via a wire or wirelessly. The data is presented and processed in a manner consistent with industry standard peripherals and which the host can interpret in the same way in which it would handle a peripheral connected directly to itself.

For completeness, monitors used on the MacIntosh currently allow peripherals to be plugged into the monitor. However, these peripherals use a USB hub in the monitor. The hub is simply a repeater function. The monitor itself, however, does not use directly this data from the peripherals for a PC-independent functionality.

The re-use according to the invention of a peripheral for multiple functionalities saves cost, desk space and wiring complexity in comparison with the case wherein two or more different peripherals are to be used. In addition, connecting the peripherals to the monitor provides a more convenient and overseeable way to the user of physically configuring the PC or Set Top Box system. Moreover, the display device according to the invention can be used as an independent appliance, in addition to its conventionally being used as a slave to a PC or to another data processing system to which it is hooked up.

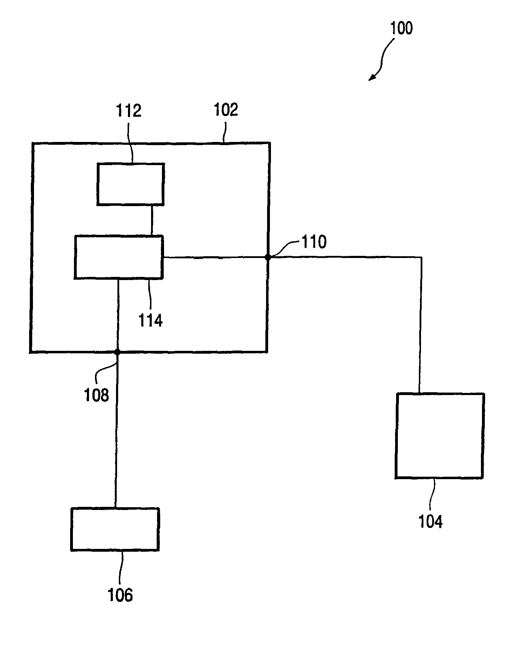

These and other aspects of the invention will be apparent from and elucidated with reference to the accompanying drawing, wherein the sole Figure 1 is a block diagram of a system incorporating the invention.

System 100 comprises a display monitor 102, a PC 104 and a peripheral device 106. Monitor 102 has a connection 108 for connecting with peripheral device 106, and a connection 110 for connection to PC 104. Monitor 102 has multiple operational modes. In a first mode, monitor 102 operates as a peripheral to PC 104. For example, monitor 102 serves as an output device to PC 104 when monitor 102 has been set into the first operational mode. In a second operational mode, monitor 102 operates as a stand-alone device, i.e., independent of PC 104. For example, monitor 102 comprises a sub-system 112 for enabling the rendering of a digital image stored on, e.g., a removable solid state memory. As another example, sub-system 112 comprises a wireless modem and data processing capabilities to enable wireless data communication between the stand-alone monitor and an external data source. In the latter example, the data processing capabilities allow, e.g., to receive compressed video data and decompress and render the data locally at monitor 102.

Monitor 102 further comprises a mode switching circuit 114. Circuit 114 determines in which of the modes monitor 102 is being used. For example, circuit 114 detects whether or not monitor 102 is physically (wired or wireless) connected to PC 104. When monitor 102 is connected to PC 104 via connection 110, circuit 114 determines that monitor 102 itself is being used as a peripheral, in this case to PC 104. When monitor 102 is disconnected from PC 104, circuit 114 enables to determine that monitor 102 is being used as a PC-independent appliance. For, e.g., a VGA connection, the presence or absence of a PC is detectable in a simple way. The PC provides +5V on one of the VGA connector pins. If the PC is powered, +5V is present. However, there may be other states where the PC is present and the monitor is still operational in a PC-independent mode (for instance when the PC is sleeping). Alternatively, circuit 114 comprises a simple switch to be flipped by the user in order to set monitor 102 to the proper operational mode, independently of an automatic detection of the presence or absence of a functional connection to PC 104.

Peripheral device 106 enables user interaction with PC 104, e.g., in a conventional scenario, via monitor 102 in the first operational mode as if peripheral device 106 were directly connected to PC 104. Device 106 enables user interaction with monitor 102 directly in the second operational mode, e.g., to run a slide show or to control the processing capabilities local to monitor 102, independently of PC 104. Peripheral device 106 comprises, e.g., a user input device such as a mouse or a keyboard for data entry to PC 104 via monitor 102, or a card reader, a CD-ROM or a CD-R/W, in the first operational mode of monitor 102, and for user interaction to sub-system 112 of monitor 102 in the second operational mode of monitor 102.

Different data communication protocols may be used for communication between peripheral device 106 and monitor 102 on the one hand, and for communication between monitor 102 and PC 104 on the other hand. For example, monitor 102 is coupled to PC 104 via USB, and peripheral device 106 is connected to a PS/2 on monitor 102. In the peripheral mode of monitor 102, i.e., monitor 102 serves as a peripheral to PC 104, circuit 114 of monitor 102 maps the PS/2 peripheral 106 to a USB peripheral for proper communication with PC 104. More than one peripheral 106 and/or more than one subsystem 112 can be present.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A display device (102) connectable to a data processing system (104), the display device (102) comprising:
- an input (108) for connecting to a first peripheral device (106); and
- circuitry (114) for enabling data communication with the first peripheral device (106) and for data communication between the first peripheral device (106) and the data processing system (104) via the display device (102),
**characterized in that**
- the display device (102) is adapted to function in at least a first operational mode that is independent of the data processing system (104), the circuitry (114) being adapted in said first operational mode for enabling data communication with the first peripheral device (106) for user control of a functionality of the display device (102) without making use of the data processing system (104); and **in that**
- the display device (102) is adapted to function in a further operational mode in which the display device (102) H < > is a peripheral to the data processing system (104), the circuitry (114) being adapted in said further operational mode for enabling data communication between the first peripheral device (106) and the data processing system (104) via the display device (102) when the display device (102) is connected to the data processing system (104) and to the first peripheral display (106).

2. The display device (102) of claim 1, comprising further circuitry for setting the display device (102) into the first operational mode or into the further operational mode.

3. The display device (102) of claim 2, wherein the further circuitry is operative to automatically set the display device (102) into the further operational mode when detecting that the display device (102) is connected to the data processing system (104).

4. The display device (102) of claim 1, further comprising a subsystem (112) for storing data to be rendered on the display device in the first operational mode under user control of the first peripheral device (106).

5. The display device (102) of claim 1, comprising conversion circuitry for converting first data of a first format being communicated from the first peripheral device (106) to the device (102) into a second format for data communication with the data processing system (104) in the further operational mode.

## Patentansprüche

1. Wiedergabeanordnung (102), die mit einem Datenverarbeitungssystem (104) verbunden werden kann, wobei diese Wiedergabeanordnung (102) die nachfolgenden Elemente umfasst:
- einen Eingang (108) zur Verbindung mit einer ersten Peripherieanordnung (106); und
- eine Schaltungsanordnung (114), wodurch Datenkommunikation mit der ersten Peripherieanordnung (106) und Datenkommunikation zwischen der ersten Peripherieanordnung (106) und dem Datenverarbeitungssystem (104) über die Wiedergabeanordnung (102) ermöglicht wird,
**dadurch gekennzeichnet, dass**
- die Wiedergabeanordnung (102), dazu vorgesehen ist, in wenigstens einer ersten Betriebsart zu funktionieren, die unabhängig ist von dem Datenverarbeitungssystem (104), wobei die Schaltungsanordnung (114) dazu vorgesehen ist, dass in der ersten Betriebsart Datenkommunikation mit der ersten Peripherieanordnung (106) zur Benutzersteuerung einer Funktionalität der Wiedergabeanordnung (102) ermöglicht wird, ohne dass das Datenverarbeitungssystem (104) verwendet wird; und dass
- die Wiedergabeanordnung (102) dazu vorgesehen ist, in einer weiteren Betriebsart zu funktionieren, in der die Wiedergabeanordnung (102) eine Peripherieanordnung für das Datenverarbeitungssystem (104) ist, wobei die Schaltungsanordnung (114) dazu vorgesehen ist, in der genannten weiteren Betriebsart Datenkommunikation zwischen der ersten Peripherieanordnung (106) und dem Datenverarbeitungssystem (104) über die Wiedergabeanordnung (102) zu ermöglichen, wenn die Wiedergabeanordnung (102) mit dem Datenverarbeitungssystem (104) und mit der ersten Peripherieanordnung (106) verbunden ist.

2. Wiedergabeanordnung (102) nach Anspruch 1, die weiterhin eine Schaltungsanordnung aufweist zum Einstellen der Wiedergabeanordnung (102) in die erste Betriebsart oder in die weitere Betriebsart.

3. Wiedergabeanordnung (102) nach Anspruch 2, wobei die weitere Schaltungsanordnung zum automatischen Einstellen der Wiedergabeanordnung (102) in die weitere Betriebsart wirksam ist, wenn detektiert wird, dass die Wiedergabeanordnung (102) mit dem Datenverarbeitungssystem (104) verbunden ist.

4. Wiedergabeanordnung (102) nach Anspruch 1, die weiterhin ein Subsystem (112) aufweist zum Speichern von Daten, die in der Wiedergabeanordnung in der ersten Betriebsart unter Steuerung des Benutzers der ersten Peripherieanordnung (106) aufbereitet werden sollen.

5. Wiedergabeanordnung (102) nach Anspruch 1, mit einer Umwandlungsschaltung zum Umwandeln erster Daten eines ersten Formats, die von der ersten Peripherieanordnung (106) der Anordnung (102) zugeführt werden, in ein zweites Format zur Datenkommunikation mit dem Datenverarbeitungssystem (104) in der weiteren Betriebsart.

## Revendications

1. Dispositif d'affichage (102) qui est connectable à un système de traitement de données (104), le dispositif d'affichage (102) comprenant:
- une entrée (108) pour être connectée à un premier dispositif périphérique (106); et
- des circuits (114) pour permettre la communication de données avec le premier dispositif périphérique (106) et pour la communication de données entre le premier dispositif périphérique (106) et le système de traitement de données (104) par le biais du dispositif d'affichage (102),
**caractérisé en ce que**
- le dispositif d'affichage (102) est adapté à fonctionner dans au moins un premier mode opérationnel qui est indépendant du système de traitement de données (104), les circuits (114) étant adaptés dans ledit premier mode opérationnel de manière à permettre la communication de données avec le premier dispositif périphérique (106) pour la commande d'utilisateur d'une fonctionnalité du dispositif d'affichage (102) sans ne faire usage du système de traitement de données (104); et **en ce que**
- le dispositif d'affichage (102) est adapté à fonctionner dans un nouveau autre mode opérationnel dans lequel le dispositif d'affichage (102) est un périphérique pour le système de traitement de données (104), les circuits (114) étant adaptés dans ledit nouveau autre mode opérationnel de manière à permettre la communication de données entre le premier dispositif périphérique (106) et le système de traitement de données (104) par le biais du dispositif d'affichage (102) lorsque le dispositif d'affichage (102) est connecté au système de traitement de données (104) et au premier dispositif d'affichage périphérique (106).

2. Dispositif d'affichage (102) selon la revendication 1, comprenant de nouveaux autres circuits pour régler le dispositif d'affichage (102) dans le premier mode opérationnel ou dans le nouveau autre mode opérationnel.

3. Dispositif d'affichage (102) selon la revendication 2, dans lequel les nouveaux autres circuits sont actifs pour régler automatiquement le dispositif d'affichage (102) dans le nouveau autre mode opérationnel lorsqu'on détecte que le dispositif d'affichage (102) est connecté au système de traitement de données (104).

4. Dispositif d'affichage (102) selon la revendication 1, comprenant encore un sous-système (112) pour stocker des données à rendre sur le dispositif d'affichage dans le premier mode opérationnel sous la commande d'utilisateur du premier dispositif périphérique (106).

5. Dispositif d'affichage (102) selon la revendication 1, comprenant des circuits de conversion pour convertir des premières données d'un premier format étant communiquées à partir du premier dispositif périphérique (106) au dispositif (102) en un second format pour la communication de données avec le système de traitement de données (104) dans le nouveau autre mode opérationnel.
